# EUROPÄISCHE PATENTSCHRIFT

(11) **EP 4 084 985 B1**
(45) Veröffentlichungstag und Bekanntmachung des Hinweises auf die Patenterteilung: **27.03.2024**
(21) Anmeldenummer: 21700290.6
(22) Anmeldetag: 11.01.2021
(51) Int. Cl.: B60L 5/28

(54) **STRASSENGEFÜHRTES KRAFTFAHRZEUG UND VERFAHREN ZUM ANBÜGELN EINES STROMABNEHMERS EINES STRASSENGEFÜHRTEN KRAFTFAHRZEUGES**
ROAD-GUIDED MOTOR VEHICLE AND METHOD FOR RAISING THE PANTOGRAPH OF A POWER COLLECTOR OF A ROAD-GUIDED MOTOR VEHICLE
VÉHICULE AUTOMOBILE À GUIDAGE ROUTIER ET PROCÉDÉ D'ÉLÉVATION DU PANTOGRAPHE D'UN COLLECTEUR DE PUISSANCE D'UN VÉHICULE AUTOMOBILE À GUIDAGE ROUTIER

(30) Priorität: 15.01.2020 DE 102020200449
(43) Veröffentlichungstag der Anmeldung: 09.11.2022
(73) Patentinhaber: Volkswagen AG, 38440 Wolfsburg (DE); Siemens Mobility GmbH, 81739 München (DE)
(72) Erfinder: WALLENTIN, Per, 38440 Wolfsburg (DE); MÖLLE, Steffen, 39128 Magdeburg (DE)
(74) Vertreter: FDST Patentanwälte
(86) Internationale Anmeldenummer: PCT/EP2021/050384
(87) Internationale Veröffentlichungsnummer: WO 2021/144223

(56) Entgegenhaltungen:
- DE-A1-102014 111 264

## Beschreibung

Die Erfindung betrifft ein straßengeführtes Kraftfahrzeug und ein Verfahren zum Anbügeln eines Stromabnehmers eines straßengeführten Kraftfahrzeuges.

Es ist bekannt, straßengeführte Kraftfahrzeuge mit mindestens einem Stromabnehmer auszubilden, um elektrische Energie von mindestens einer Oberleitung dem Kraftfahrzeug zuzuführen. Die Stromabnehmer werden auch als Pantographen bezeichnet. Dabei kann die elektrische Energie zum Vortrieb des Kraftfahrzeuges genutzt werden und zusätzlich eine Hochvoltbatterie geladen werden, sodass insgesamt die Reichweite solcher elektrischen Fahrzeuge erhöht wird.

Dabei muss eine Oberleitung durch das Kraftfahrzeug identifiziert werden, da nicht alle Streckenabschnitte mit solchen Oberleitungen versehen sind und diese typischerweise nur einer Fahrbahn zugeordnet sind. Hierzu gibt es verschiedene Lösungsansätze.

Aus der DE 11 2013 001 814 T5 ist ein System zum automatischen Führen eines geländegängigen Lastkraftwagens an einem Arbeitsbereich bekannt, wobei der Arbeitsbereich einen Oberleitungsdraht zum Zuführen von elektrischer Energie zu dem geländegängigen Lastkraftwagen umfasst, wobei der Oberleitungsdraht entlang eines Fahrwegs verläuft, der zwei oder mehr Merkmale am Fahrwegrand aufweist. Das System umfasst einen Oberleitungsstromabnehmer zum selektiven Kontaktieren des Oberleitungsdrahts, einen oder mehrere Sensoren, die dem geländegängigen Lastkraftwagen zugeordnet sind, und eine Steuereinrichtung, die mit dem einen oder mehreren Sensoren und einer Maschinenlenkungssteuerung verbunden und so ausgebildet ist, dass sie eine Position des geländegängigen Lastkraftwagens bezogen auf den Oberleitungsdraht durch Erfassen der zwei oder mehr Merkmale am Fahrwegrand erfasst und den Lastkraftwagen über die Maschinenlenkungssteuerung automatisch so lenkt, dass der Oberleitungsstromabnehmer mit dem Oberleitungsdraht in Kontakt gehalten wird. Der eigentliche Anbügelungsvorgang kann dabei automatisch oder manuell erfolgen.

Aus der DE 10 2015 213 071 A1 ist eine Fahrleitungs-Detektionsvorrichtung für ein Wegesystem mit einem fahrspurgebundenen Energieversorgungssystem bekannt, insbesondere einem Oberleitungssystem. Dabei weist die Vorrichtung eine Detektoreinheit auf, welche relativ zu einer Position einer zugeordneten Fahrleitung des Energieversorgungssystems stationär angeordnet ist und dazu eingerichtet ist, eine Position eines auf dem Wegesystem befindlichen elektrischen Fahrzeugs zu ermitteln. Weiter weist die Vorrichtung eine Relativpositions-Ermittlungseinheit auf, welche dazu eingerichtet ist, auf Basis der ermittelten Position des elektrischen Fahrzeugs und der Position der Fahrleitung des Energieversorgungssystems eine Relativposition des elektrischen Fahrzeugs zu der Fahrleitung zu ermitteln. Schließlich weist die Vorrichtung eine Positionsinformations-Übertragungseinheit auf, welche dazu eingerichtet ist, die ermittelte Relativposition an das betreffende elektrische Fahrzeug drahtlos zu übermitteln.

Aus der DE 10 2016 201 416 A1 ist ein Verfahren zur Überwachung einer entlang einer Fahrstrecke verlaufenden Fahrleitung bekannt, bei dem wenigstens eine für eine Kontaktqualität zwischen der Fahrleitung und einem Stromabnehmer eines Fahrzeugs repräsentative Messgröße ermittelt wird und bei dem anhand zumindest der wenigstens einen Messgröße wenigstens eine Störstelle ermittelt wird, an der die ermittelte Messgröße wenigstens einmal außerhalb von einem festgesetzten zulässigen Bereich liegt. Die Fahrstrecke ist dabei insbesondere eine Bahnstrecke. Dabei wird eine Position und/oder eine Geschwindigkeit des Fahrzeugs an der wenigstens einen ermittelten Störstelle erfasst. Als Messgröße wird beispielsweise eine für einen Lichtbogen zwischen dem Stromabnehmer und der Fahrleitung repräsentative Strahlung ermittelt. Dabei kann zusätzlich eine Kontaktkraft zwischen Stromabnehmer und Fahrleitung ermittelt werden. Auch kann die Messgröße eine Beschleunigung des Stromabnehmers ermittelt werden. Hierdurch kann der Aufwand für zusätzliche Messfahrten und Messfahrzeuge eingespart und zusätzlich bei jeder fahrplanmäßigen Befahrung der Fahrstrecke der Zustand der Fahrleitung erfasst werden. Dadurch können Instandhaltungsintervalle optimal angepasst werden oder Wartungseinsätze speziell angefordert werden.

Bei straßengeführten Kraftfahrzeugen tritt dabei das Problem auf, dass es aufgrund von Fahrbahnunebenheiten oder Fahrbahnschäden dazu kommen kann, dass der Kontakt zwischen Stromabnehmer und Oberleitung abreißt, wobei in diesen Fällen der Stromabnehmer abgesenkt wird, um eine Lichtbogenbildung zu verhindern. Zur Lösung könnte der Anpressdruck erhöht werden, was jedoch den Abrieb und somit den Verschleiß erhöht.

DE 10 2014 111 264 A1 beschreibt eine Stromabnehmervorrichtung für fahrleitungsbetriebene Fahrzeuge mit einem einends zum schwenkbaren Vorsehen auf einem Dachabschnitt eines fahrleitungsbetriebenen Fahrzeugs ausgebildeten und anderenends einen zum elektrisch Strom abnehmenden Zusammenwirken mit einem Fahrdraht ausgebildeten Stromabnehmerkopf aufweisenden Arm, dem Elevationsmittel zum gesteuerten Heben und Absenken zugeordnet sind, wobei die Elevationsmittel auf Pneumatik- und/oder Hydraulikbasis wirken und zum Aufbringen einer vorbestimmten und/oder einstellbaren und/oder auf mindestens einen Sollwert geregelten Andruckkraft des Stromabnehmerkopfes an den Fahrdraht ausgebildet sind.

Der Erfindung liegt das technische Problem zugrunde, ein straßengeführtes Kraftfahrzeug zu schaffen, bei dem die Kontaktierung mit einer Oberleitung verbessert ist, sowie ein geeignetes Verfahren zur Verfügung zu stellen.

Die Lösung des technischen Problems ergibt sich durch ein straßengeführtes Kraftfahrzeug mit den Merkmalen des Anspruchs 1 sowie ein Verfahren mit den Merkmalen des Anspruchs 7. Weitere vorteilhafte Ausgestaltungen der Erfindung ergeben sich aus den Unteransprüchen.

Das straßengeführte Kraftfahrzeug weist mindestens einen Stromabnehmer für mindestens eine Oberleitung sowie mindestens eine Aktorik auf. Das Kraftfahrzeug ist derart ausgebildet, dass der mindestens eine Stromabnehmer mittels der Aktorik von einer ersten abgebügelten Position in eine zweite angebügelte Position oder umgekehrt gesteuert wird. Weiter ist dem Stromabnehmer mindestens eine Sensorik zugeordnet, die mit einem Steuergerät der Aktorik datentechnisch verbunden ist, wobei das Steuergerät derart ausgebildet ist, dass mittels der Daten der Sensorik ein Anpressdruck des Stromabnehmers an die Oberleitung erfasst oder ermittelt wird. Weiter weist das Kraftfahrzeug einen Speicher mit ortsaufgelösten Anpressdrücken sowie eine Positionsermittlungseinheit auf, wobei das Kraftfahrzeug derart ausgebildet ist, dass zu einer von der Positionsermittlungseinheit ermittelten Position des Kraftfahrzeugs ein zugehöriger Anpressdruck aus dem Speicher ausgelesen wird. Der ausgelesene Anpressdruck wird dann automatisch durch das Steuergerät eingestellt oder dem Kraftfahrzeugführer signalisiert, sodass dieser diesen manuell einstellen kann. Hierdurch kann ein optimierter Anpressdruck eingestellt werden, der insbesondere den lokalen Fahrbahnunebenheiten angepasst ist, sodass die Häufigkeit eines Kontaktabrisses zwischen Stromabnehmer und Oberleitung reduziert wird, aber der Abrieb bzw. Verschleiß nur so stark wie nötig ist. Hierdurch wird die Reichweite des straßengeführten Kraftfahrzeugs erhöht. Die Anpressdrücke können dabei in einer digitalen Straßenkarte abgelegt sein. Die Positionsermittlungseinheit kann dabei ein satellitengestützter Positionsempfänger sein. Diese kann dann weitere Sensoriken umfassen, um das Positionssignal zu verbessern. Auch kann alternativ oder ergänzend vorgesehen sein, dass auf stationäre Daten neben der Fahrbahn zurückgegriffen wird, wie es im Stand der Technik beschrieben ist.

In einer Ausführungsform ist das Kraftfahrzeug derart ausgebildet, bei fehlenden Anpressdrücken im Speicher für eine Position des Kraftfahrzeugs einen vorab festgelegten Anpressdruck einzustellen.

In einer Ausführungsform ist der vorab festgelegte Anpressdruck ein minimal zulässiger Anpressdruck. Somit wird der Abrieb minimiert, aber die Wahrscheinlichkeit eines Kontaktabrisses erhöht. Kommt es zu keinem Kontaktabriss, so wird der Anpressdruck für diese Position zukünftig beibehalten. Kommt es hingegen zu einem Kontaktabriss, so wird der abgespeicherte Anpressdruck für diese Position des Kraftfahrzeugs erhöht. Erfolgt dann beim nächsten Befahren wieder ein Kontaktabriss, so wird der Anpressdruck weiter erhöht, solange bis kein Kontaktabriss mehr auftritt oder ein maximaler Anpressdruck erreicht ist. Das Kraftfahrzeug stellt also selbstlernend den optimalen Anpressdruck ein.

In einer alternativen Ausführungsform ist der vorab festgelegte Anpressdruck ein mittlerer Anpressdruck (z.B. arithmetischer Mittelwert von minimalem und maximalem Anpressdruck). Dabei kann vorgesehen sein, dass bei keinem Kontaktabriss der Anpressdruck reduziert wird, um einen optimalen Anpressdruck zu ermitteln, der bei minimalem Anpressdruck eine sichere Kontaktierung gewährleistet.

Grundsätzlich denkbar wäre es auch, dass der vorab festgelegte Anpressdruck ein maximaler Anpressdruck ist, der dann vorzugsweise sukzessive verkleinert wird, bis es zu einem Kontaktabriss kommt, wobei dann anschließend der Anpressdruck entsprechend wieder erhöht wird. Bei dem maximalen Anpressdruck ist der Lernvorgang also nicht zwingend, wird aber vorzugsweise durchgeführt.

In einer Ausführungsform ist das Kraftfahrzeug derart ausgebildet, dass Fehler bei der Kontaktierung zwischen Stromabnehmer und Oberleitung ortsaufgelöst erfasst werden und ein dem Fehler entgegenwirkender Anpressdruck in dem Speicher eingeschrieben wird, so wie dies zuvor bereits beschrieben wurde.

In einer weiteren Ausführungsform ist das Kraftfahrzeug mit einer Luftschnittstelle ausgebildet, wobei das Kraftfahrzeug derart ausgebildet ist, über die Luftschnittstelle aktualisierte Anpressdrücke an eine Zentrale und/oder andere Kraftfahrzeuge zu übermitteln und/oder über die Luftschnittstelle aktualisierte Anpressdrücke von einer Zentrale und/oder anderen Kraftfahrzeugen zu empfangen und zu speichern. Hierdurch kann der Lernprozess erheblich beschleunigt werden. Bei den Daten sind dabei gegebenenfalls die Art der Fahrzeuge und/oder Stromabnehmer zu berücksichtigen, von denen die Daten stammen.

Hinsichtlich der verfahrensmäßigen Ausgestaltung der Erfindung kann dabei vollinhaltlich auf die vorangegangenen Ausführungen Bezug genommen werden.

Die Erfindung wird nachfolgend anhand bevorzugter Ausführungsbeispiele näher erläutert. Die Figuren zeigen:
- Fig. 1: eine schematische Darstellung eines straßengeführten Kraftfahrzeuges mit Stromabnehmern für Oberleitungen und
- Fig. 2: ein schematisches Blockschaltbild einer Vorrichtung zur Steuerung eines Stromabnehmers.

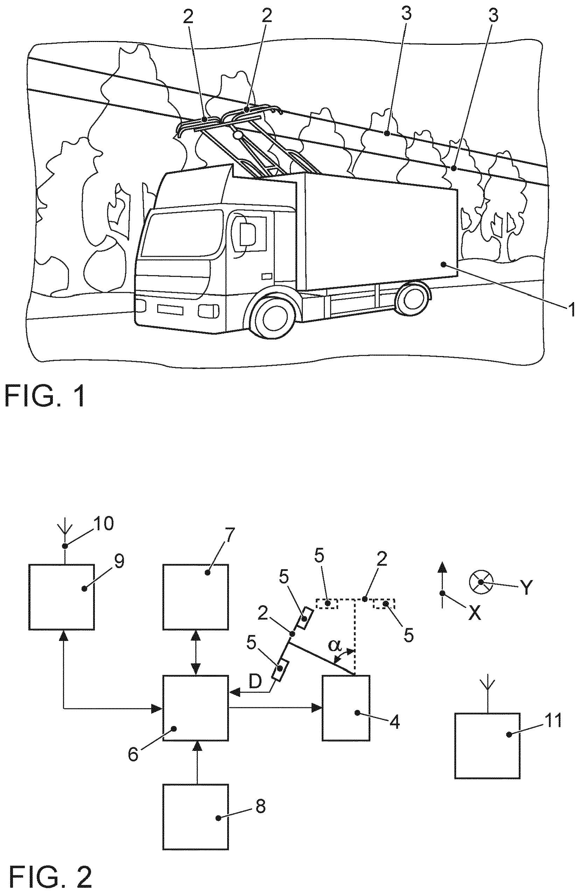

In der Fig. 1 ist ein straßengeführtes Kraftfahrzeug 1 mit zwei Stromabnehmern 2 zur Kontaktierung mit Oberleitungen 3 dargestellt, wobei in der Fig. 1 die Stromabnehmer 2 in einer angebügelten Position dargestellt sind. Sind beispielsweise keine Oberleitungen 3 vorhanden, so werden die Stromabnehmer 2 in eine eingefahrene, abgebügelte Position bewegt.

In der Fig. 2 ist schematisch ein Blockschaltbild einer Vorrichtung zur Ansteuerung mindestens eines Stromabnehmers 2 dargestellt. Die Vorrichtung weist mindestens eine Aktorik 4 auf, mittels derer der Stromabnehmer 2 von der dargestellten abgebügelten Position in eine zweite angebügelte Position und umgekehrt bewegt werden kann, beispielsweise indem der Stromabnehmer 2 um einen Winkel α nach oben geschwenkt werden kann. Je nach Lage der Oberleitung 3 sowie des Winkels α stellt sich dann ein bestimmter Anpressdruck zwischen Stromabnehmer 2 und Oberleitung an. Zusätzlich oder alternativ kann die Aktorik 4 derart ausgebildet sein, den Stromabnehmer 2 in Y-Richtung und/oder X-Richtung zu verschieben.

Alternativ oder ergänzend kann die Aktorik 4 auch ein Luftfedersystem sein, das das komplette Fahrzeug anhebt oder absenkt. Dabei kann der Anpressdruck durch das Maß der Anhebung gesteuert werden. Dabei kann vorgesehen sein, dass durch eine erste Aktorik 4 die Stromabnehmer 2 herunter- oder hochgeklappt werden, der eigentliche Anbügelungsvorgang jedoch nur durch das Luftfedersystem als zweite Aktorik 4 erfolgt. Auch ist es möglich, dass durch das Hochklappen der Stromabnehmer 2 bereits die Anbügelung erfolgt, wobei dann der Anpressdruck durch das Luftfedersystem gesteuert bzw. eingestellt wird.

Weiter weist die Vorrichtung eine Sensorik 5 auf, die am Stromabnehmer 2 angeordnet ist, wobei die Sensorik 5 ihre Daten D an ein Steuergerät 6 übermittelt, dass die Aktorik 4 ansteuert. Die Sensorik 5 ist beispielsweise als Druck- oder Kraftsensor oder als Beschleunigungssensor ausgebildet, wobei das Steuergerät 6 derart ausgebildet ist, aus den Daten D einen Anpressdruck zwischen Stromabnehmer 2 und Oberleitung 3 zu erfassen oder zu ermitteln.

Das Steuergerät 6 ist weiter mit einem Speicher 7, einer Positionsermittlungseinheit 8 sowie einem weiteren Steuergerät 9 mit einer Luftschnittstelle 10 verbunden. Das Steuergerät 9 und die Luftschnittstelle 10 bilden zusammen ein Kommunikationsmodul, um mit einer Zentrale und/oder anderen Kraftfahrzeugen zu kommunizieren. In dem Speicher 7 sind Anpressdrücke zwischen dem mindestens einen Stromabnehmer 2 und der mindestens einen Oberleitung 3 ortsaufgelöst abgelegt. Die ortsaufgelösten Anpressdrücke können beispielsweise vorab durch ein Mess-Kraftfahrzeug aufgenommen werden und in dem Speicher 7 abgelegt werden, wo diese dann zur Ansteuerung der Aktorik 4 zur Verfügung stehen. Dabei wird der Anpressdruck an Abschnitten mit großen Fahrbahnunebenheiten, Schlaglöchern etc. erhöht gegenüber ebenen Fahrbahnabschnitten.

Während der Fahrt ermittelt die Positionsermittlungseinheit 8 die aktuelle Position des Kraftfahrzeugs 1 und übermittelt diese an das Steuergerät 6. Dieses ermittelt nun beispielsweise anhand der Daten im Speicher 7 und/oder mittels weiterer Sensoriken, ob eine Oberleitung 3 vorhanden ist. Ist eine Oberleitung 3 vorhanden, so liest das Steuergerät 6 den zugehörigen Anpressdruck aus und stellt diesen mittels der Aktorik 4 ein, wobei der eingestellte Anpressdruck durch die Sensorik 5 überprüft wird. Kommt es dann doch zu einem Kontaktabbruch zwischen Stromabnehmer 2 und Oberleitung 3, so wird dies ortsaufgelöst abgespeichert und der zukünftige Anpressdruck erhöht. Die Erhöhung des Anpressdrucks erfolgt dabei vorzugsweise stufenförmig. Diese Information kann dann auch über das Steuergerät 9 und die Luftschnittstelle 10 der Zentrale 11 und/oder anderen Kraftfahrzeugen zur Verfügung gestellt werden, sodass andere Kraftfahrzeuge an dieser Position ihren Anpressdruck darauf anpassen. Ebenso kann das Kraftfahrzeug 1 von der Zentrale 11 und/oder anderen Kraftfahrzeugen angepasst bzw. aktualisierte Anpressdrücke empfangen und abspeichern.

An Positionen, wo noch keine empirisch ermittelten Anpressdrücke im Speicher 7 vorliegen, können vorab festgelegte Anpressdrücke verwendet werden. Dies kann beispielsweise ein minimaler, ein maximaler oder ein mittlerer Anpressdruck sein. Wird beispielsweise ein maximaler Anpressdruck gewählt, so kann dieser solange reduziert werden, bis es zu einem Kontaktabriss kommt. Dies kann auch während des Kontaktvorgangs erfolgen. Anschließend kann dann der Anbügelungsvorgang mit dem nächst höheren Anpressdruck wiederholt werden. Verschlechtert sich die Fahrbahn, so kommt es beim nächsten Befahren gegebenenfalls zu einem Kontaktabriss und der Anpressdruck wird weiter erhöht.

Somit wird ein selbstlernendes System zur Verfügung gestellt, das die optimalen Anpressdrücke lernt.

Die Zentrale 11 kann aus den Daten der Kraftfahrzeuge 1 über die Anpressdrücke auf die Qualität der Fahrbahn und/oder der Oberleitung 3 schließen und gegebenenfalls Reparaturaufträge auslösen.

### Bezugszeichenliste

- 1: Kraftfahrzeug
- 2: Stromabnehmer
- 3: Oberleitung
- 4: Aktorik
- 5: Sensorik
- 6: Steuergerät
- 7: Speicher
- 8: Positionsermittlungseinheit
- 9: Steuergerät
- 10: Luftschnittstelle
- 11: Zentrale

## Patentansprüche

1. Straßengeführtes Kraftfahrzeug (1), mit mindestens einem Stromabnehmer (2) für mindestens eine Oberleitung (3) und mindestens einer Aktorik (4), wobei das Kraftfahrzeug (1) derart ausgebildet ist, dass der mindestens eine Stromabnehmer (2) mittels der Aktorik (4) von einer ersten abgebügelten Position in eine zweite angebügelte Position oder umgekehrt gesteuert wird,
**dadurch gekennzeichnet, dass**
dem Stromabnehmer (2) mindestens eine Sensorik (5) zugeordnet ist, die mit einem Steuergerät (6) der Aktorik (4) datentechnisch verbunden ist, wobei das Steuergerät (6) derart ausgebildet ist, dass mittels der Daten (D) der Sensorik (5) ein Anpressdruck des Stromabnehmers (2) an die Oberleitung (3) erfasst oder ermittelt wird, einen Speicher (7) mit ortsaufgelösten Anpressdrücken für den Stromabnehmer (2) sowie einer Positionsermittlungseinheit (8), wobei das Kraftfahrzeug (1) derart ausgebildet ist, dass zu einer von der Positionsermittlungseinheit (8) ermittelten Position des Kraftfahrzeugs (1) ein zugehöriger Anpressdruck aus dem Speicher (7) ausgelesen und automatisch durch das Steuergerät (6) eingestellt wird oder dem Kraftfahrzeugführer signalisiert wird.

2. Straßengeführtes Kraftfahrzeug nach Anspruch 1, **dadurch gekennzeichnet, dass** das Kraftfahrzeug (1) derart ausgebildet ist, bei fehlenden Anpressdrücken im Speicher (7) für eine Position einen vorab festgelegten Anpressdruck einzustellen.

3. Straßengeführtes Kraftfahrzeug nach Anspruch 2, **dadurch gekennzeichnet, dass** der vorab festgelegte Anpressdruck ein minimal zulässiger Anpressdruck ist.

4. Straßengeführtes Kraftfahrzeug nach Anspruch 2, **dadurch gekennzeichnet, dass** der vorab festgelegte Anpressdruck ein mittlerer zulässiger Anpressdruck ist.

5. Straßengeführtes Kraftfahrzeug nach einem der vorangegangenen Ansprüche, **dadurch gekennzeichnet, dass** das Kraftfahrzeug (1) derart ausgebildet ist, dass Fehler bei der Kontaktierung zwischen Stromabnehmer (2) und Oberleitung (3) ortsaufgelöst erfasst werden und ein dem Fehler entgegenwirkender Anpressdruck in den Speicher (2) eingeschrieben wird.

6. Straßengeführtes Kraftfahrzeug nach einem der vorangegangenen Ansprüche, **dadurch gekennzeichnet, dass** das Kraftfahrzeug (1) mit einer Luftschnittstelle (10) ausgebildet ist, wobei das Kraftfahrzeug (1) derart ausgebildet ist, über die Luftschnittstelle (10) aktualisierte Anpressdrücke an eine Zentrale (11) und/oder andere Kraftfahrzeuge zu übermitteln und/oder über die Luftschnittstelle (10) aktualisierte Anpressdrücke von einer Zentrale (11) und/oder anderen Kraftfahrzeugen zu empfangen und zu speichern.

7. Verfahren zum Anbügeln eines Stromabnehmers (2) eines straßengeführten Kraftfahrzeugs (1) nach einem der Ansprüche 1 bis 6 an eine Oberleitung (3), wobei eine Position des Kraftfahrzeugs (1) ermittelt wird, wobei zu der ermittelten Position Anpressdrücke abgelegt sind, wobei durch ein Steuergerät (6) eine Aktorik (4) angesteuert wird, sodass sich der abgelegte Anpressdruck automatisch einstellt oder der abgelegte Anpressdruck signalisiert wird.

8. Verfahren nach Anspruch 7, **dadurch gekennzeichnet, dass** bei fehlenden Anpressdrücken für eine Position ein vorab festgelegter Anpressdruck eingestellt wird.

9. Verfahren nach Anspruch 8, **dadurch gekennzeichnet, dass** der vorab festgelegte Anpressdruck ein minimal zulässiger Anpressdruck ist.

10. Verfahren nach Anspruch 8, **dadurch gekennzeichnet, dass** der vorab festgelegte Anpressdruck ein mittlerer zulässiger Anpressdruck ist.

## Claims

1. Road-based motor vehicle (1) having at least one current collector (2) for at least one overhead line (3) and having at least one actuator system (4), wherein the motor vehicle (1) is designed in such a way that the at least one current collector (2) is controlled from a first, lowered position to a second raised position, or vice versa, by means of the actuator system (4),
**characterized in that** the current collector (2) is assigned at least one sensor system (5) which has a data connection to a control device (6) of the actuator system (4), wherein the control device (6) is designed in such a way that, by means of the data (D) from the sensor system (5), a contact pressure of the current collector (2) against the overhead line (3) is detected or ascertained, having a memory (7) with spatially resolved contact pressures for the current collector (2), and having a position-ascertaining unit (8), wherein the motor vehicle (1) is designed in such a way that, in a position of the motor vehicle (1) ascertained by the position-ascertaining unit (8), an associated contact pressure is read out from the memory (7) and is automatically set by the control device (6) or is signalled to the motor vehicle driver.

2. Road-based motor vehicle according to Claim 1, **characterized in that** the motor vehicle (1) is designed in such a way as to set a predefined contact pressure if contact pressures for a position are missing from the memory (7).

3. Road-based motor vehicle according to Claim 2, **characterized in that** the predefined contact pressure is a minimum permissible contact pressure.

4. Road-based motor vehicle according to Claim 2, **characterized in that** the predefined contact pressure is a mean, permissible contact pressure.

5. Road-based motor vehicle according to any of the preceding claims, **characterized in that** the motor vehicle (1) is designed in such a way that faults in the contact-connection between a current collector (2) and an overhead line (3) are detected in a spatially resolved manner and a contact pressure that counteracts the fault is written into the memory (2).

6. Road-based motor vehicle according to any of the preceding claims, **characterized in that** the motor vehicle (1) is designed with an air interface (10), wherein the motor vehicle (1) is designed in such a way as to transmit updated contact pressures to a central control system (11) and/or other motor vehicles via the air interface (10) and/or to receive and to store updated contact pressures from a central control system (11) and/or other motor vehicles via the air interface (10).

7. Method for raising a current collector (2) of a road-based motor vehicle (1) according to any of Claims 1 to 6 to an overhead line (3), wherein a position of the motor vehicle (1) is ascertained, wherein contact pressures are stored at the ascertained position, wherein an actuator system (4) is actuated by a control device (6), so that the stored contact pressure is automatically set or the stored contact pressure is signalled.

8. Method according to Claim 7, **characterized in that** a predefined contact pressure is set if contact pressures for a position are missing.

9. Method according to Claim 8, **characterized in that** the predefined contact pressure is a minimum permissible contact pressure.

10. Method according to Claim 8, **characterized in that** the predefined contact pressure is a mean, permissible contact pressure.

## Revendications

1. Véhicule automobile à guidage routier (1), comprenant au moins un pantographe (2) pour au moins une ligne aérienne (3) et au moins un ensemble d'actionneurs (4), dans lequel le véhicule automobile (1) est réalisé de telle sorte que ledit au moins un pantographe (2) est commandé au moyen de l'ensemble d'actionneurs (4) d'une première position baissée dans une deuxième position relevée ou vice versa,
**caractérisé en ce**
**qu'**au pantographe (2) est associé au moins un ensemble de capteurs (5) qui est relié en transmission de données à un appareil de commande (6) de l'ensemble d'actionneurs (4), dans lequel l'appareil de commande (6) est réalisé de telle sorte que les données (D) de l'ensemble de capteurs (5) permettent de détecter ou d'établir une pression de contact du pantographe (2) contre la ligne aérienne (3), une mémoire (7) comprenant des pressions de contact à résolution spatiale pour le pantographe (2), ainsi qu'une unité d'établissement de position (8), dans lequel le véhicule automobile (1) est réalisé de telle sorte que pour une position du véhicule automobile (1), établie par l'unité d'établissement de position (8), une pression de contact associée est lue dans la mémoire (7) et est réglée automatiquement par l'appareil de commande (6) ou est signalée au conducteur de véhicule automobile.

2. Véhicule automobile à guidage routier selon la revendication 1, **caractérisé en ce que** le véhicule automobile (1) est réalisé pour régler une pression de contact prédéfinie s'il manque des pressions de contact dans la mémoire (7) pour une position.

3. Véhicule automobile à guidage routier selon la revendication 2, **caractérisé en ce que** la pression de contact prédéfinie est une pression de contact admissible minimale.

4. Véhicule automobile à guidage routier selon la revendication 2, **caractérisé en ce que** la pression de contact prédéfinie est une pression de contact admissible moyenne.

5. Véhicule automobile à guidage routier selon l'une quelconque des revendications précédentes, **caractérisé en ce que** le véhicule automobile (1) est réalisé de telle sorte que des défauts au moment de la mise en contact entre le pantographe (2) et la ligne aérienne (3) sont détectés à résolution spatiale, et une pression de contact s'opposant au défaut est inscrite dans la mémoire (2).

6. Véhicule automobile à guidage routier selon l'une quelconque des revendications précédentes, **caractérisé en ce que** le véhicule automobile (1) est réalisé avec une interface aérienne (10), dans lequel le véhicule automobile (1) est réalisé pour transmettre par l'interface aérienne (10) des pressions de contact mises à jour à une centrale (11) et/ou à d'autres véhicules automobiles et/ou pour recevoir par l'interface aérienne (10) des pressions de contact mises à jour d'une centrale (11) et/ou d'autres véhicules automobiles et pour les mémoriser.

7. Procédé permettant de relever un pantographe (2) d'un véhicule automobile (1) à guidage routier selon l'une quelconque des revendications 1 à 6 jusqu'à une ligne aérienne (3), dans lequel une position du véhicule automobile (1) est établie, dans lequel des pressions de contact sont mémorisées pour la position établie, dans lequel un appareil de commande (6) pilote un ensemble d'actionneurs (4) de sorte que la pression de contact mémorisée se règle automatiquement ou la pression de contact mémorisée est signalée.

8. Procédé selon la revendication 7, **caractérisé en ce qu'**une pression de contact prédéfinie est réglée s'il manque des pressions de contact pour une position.

9. Procédé selon la revendication 8, **caractérisé en ce que** la pression de contact prédéfinie est une pression de contact admissible minimale.

10. Procédé selon la revendication 8, **caractérisé en ce que** la pression de contact prédéfinie est une pression de contact admissible moyenne.
